# EUROPEAN PATENT APPLICATION

(11) **EP 3 451 195 A1**
(43) Date of publication of application: **06.03.2019**
(21) Application number: 18190643.9
(22) Date of filing: 24.08.2018
(51) Int. Cl.: G06F 17/30

(54) **MUSIC RECOMMENDING METHOD AND APPARATUS, DEVICE AND STORAGE MEDIUM**

(30) Priority: 28.08.2017 CN 201710750660
(71) Applicant: Baidu Online Network Technology Beijing Co., Ltd., Beijing 100085 (CN)
(72) Inventor: MAO, Zhu, Beijing, Beijing 100085 (CN); YUAN, Xiangnan, Beijing, Beijing 100085 (CN); LI, Jialin, Beijing, Beijing 100085 (CN)
(74) Representative: dompatent von Kreisler Selting Werner - Partnerschaft von Patent- und Rechtsanwälten mbB

(57) **Abstract**

The present disclosure provides a music recommending method and apparatus, a device and a storage medium, wherein the method comprises: obtaining speech input by a user each time while the user is performing speech chat with a smart device having a music playing function; if the user's mood can be parsed from the speech obtained each time, recommending music matched with the mood to the user. The solution of the present disclosure can be applied to improve the intelligence of the device.

## Description

The present application claims the priority of Chinese Patent Application No. 201710750660.5, filed on August 28, 2017, with the title of "Music recommending method and apparatus, device and storage medium". The disclosure of the above applications is incorporated herein by reference in its entirety.

### Field of the Disclosure

The present disclosure relates to computer application technologies, and particularly to a music recommending method and apparatus, a device and a storage medium.

### Background of the Disclosure

As technologies develop, smart devices having a speech chat function prevail increasingly, and many smart devices have a music playing function, for example, a smart loudspeaker box or a smart earphone.

Regarding the smart devices having a music playing function, the user may chat with the smart devices in a speech manner. Regarding the speech input by the user each time, the smart device looks for matched chat answer information from a corpus and then plays it to the user. The user may actively require the smart device to play a designated song for him, for example, the user may input speech "play Jay Chou's song *Nunchakus* for me", and correspondingly the smart device plays the song for the user.

It can be seen that the current smart device can only play music according to the user's requirement, and cannot actively recommend suitable music to the user according to the user's situations, thereby reducing intelligence of the device.

### Summary of the Disclosure

In view of the above, the present disclosure provides a music recommending method and apparatus, a device and a storage medium, which can improve intelligence of the device.

Specific technical solutions are as follows:
A music recommending method, comprising:
   obtaining speech input by a user each time while the user is performing speech chat with a smart device having a music playing function;
   if the user's mood can be parsed from the speech obtained each time, recommending music matched with the mood to the user.

According to a preferred embodiment of the present disclosure, before recommending music matched with the mood to the user, the method further comprises:
determining whether the mood is a mood for which music needs to be recommended;
if yes, recommending music matched with the mood to the user;
if no, playing chat answer information matched with the speech.

According to a preferred embodiment of the present disclosure, before obtaining speech input by the user each time, the method further comprises:
setting corresponding music respectively for each type of mood for which music needs to be recommended;
the recommending music matched with the mood to the user comprises:
   recommending music corresponding to the mood to the user.

According to a preferred embodiment of the present disclosure, the setting corresponding music respectively for each type of mood for which music needs to be recommended comprises:
setting a corresponding music list for each type of mood for which music needs to be recommended, the music list at least including one piece of music.

A music recommending apparatus, comprising an obtaining unit and a recommending unit;
the obtaining unit is configured to obtain speech input by a user each time while the user is performing speech chat with a smart device having a music playing function, and send the speech obtained each time to the recommending unit;
the recommending unit is configured to, if the user's mood can be parsed from the speech obtained each time, recommend music matched with the mood to the user.

According to a preferred embodiment of the present disclosure, the recommending unit is further configured to,
before recommending music matched with the mood to the user, determine whether the mood is a mood for which music needs to be recommended;
if yes, recommend music matched with the mood to the user;
if no, play chat answer information matched with the speech.

According to a preferred embodiment of the present disclosure, the apparatus further comprises a pre-processing unit;
the pre-processing unit is configured to set corresponding music respectively for each type of mood for which music needs to be recommended;
the recommending unit recommends music corresponding to the mood to the user.

According to a preferred embodiment of the present disclosure, the pre-processing unit sets a corresponding music list for each type of mood for which music needs to be recommended, and the music list at least includes one piece of music.

A computer device, comprising a memory, a processor and a computer program which is stored on the memory and runnable on the processor, wherein the processor, upon executing the program, implements the above-mentioned method.

A computer-readable storage medium on which a computer program is stored, wherein the program, when executed by a processor, implements the aforesaid method.

As can be seen from the above introduction, according to the above solutions of the present disclosure, it is possible to determine whether the user's mood can be parsed from the user-input speech obtained each time while the user is performing speech chat with the smart device having a music playing function, and if yes, recommend music matched with the user's mood to the user. As compared with the prior art, in the solutions of the present disclosure, it is possible to actively capture the user's emotion in language during chat, thereby obtain the user's mood, and then actively recommend music matched with his mood to the user, namely, actively recommend music meeting the user's current mood, thereby not only better resonating with the user, but also satisfying the user's demands for music, and improving the intelligence of the device.

### Brief Description of Drawings

Fig. 1 is a flow chart of a first embodiment of a music recommending method according to the present disclosure.
Fig. 2 is a flow chart of a second embodiment of a music recommending method according to the present disclosure.
Fig. 3 is a structural schematic diagram of components of a music recommending apparatus according to the present disclosure.
Fig. 4 illustrates a block diagram of an example computer system/server 12 adapted to implement an implementation mode of the present disclosure.

### Detailed Description of Preferred Embodiments

Technical solutions of the present disclosure will be described in more detail in conjunction with figures and embodiments to make technical solutions of the present disclosure clear and more apparent.

Obviously, the described embodiments are partial embodiments of the present disclosure, not all embodiments. Based on embodiments in the present disclosure, all other embodiments obtained by those having ordinary skill in the art without making inventive efforts all fall within the protection scope of the present disclosure.

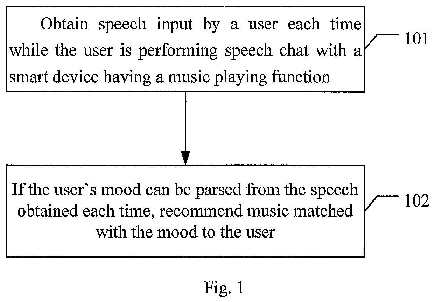

Fig. 1 is a flow chart of a first embodiment of a music recommending method according to the present disclosure. As shown in Fig. 1, the embodiment comprises the following specific implementation mode.

At 101 is obtained speech input by a user each time while the user is performing speech chat with a smart device having a music playing function.

The user may chat with the smart device in a speech manner. The speech input by the user each time may be processed in a manner as shown in 102.

102 relates to, if the user's mood can be parsed from the speech obtained each time, recommending music matched with the mood to the user.

It is possible to process the speech input by the user each time by using current technologies such as speech recognition and semantic analysis, and if the user's mood can be parsed from the obtained speech, recommend music matched with the mood to the user.

For example, if the speech input by the user is "hello", it is impossible to parse therefrom to obtain the user's mood, and correspondingly to recommend music to the user, but play matched chat answer information to the user according to the prior art.

Again for example, if the speech input by the user is "separated from boyfriend yesterday" or "disappointed in love again, already the third time", the user's mood can be parsed as "disappointed" because of "emotion", and correspondingly, "healing" and "soothing" music may be recommended to the user.

Again for example, if the speech input by the user is "I did not finish work in time yesterday and was scolded by the leader again yesterday", the user's mood can be parsed as "upset" because of "career", and correspondingly, "inspirational" or "rock and roll" type music may be recommended to the user.

Again for example, if the speech input by the user is "work overtime three consecutive days, too tired", the user's mood can be parsed as "tired" and "fatigued", and correspondingly, "brisk" and "relaxing" music may be recommended to the user.

In practical application, after the user's mood is parsed from the speech, it is possible to recommend music matched with the mood whatever the mood is, or recommend matched music only for some moods, or recommend no matched music for other moods, but play chat answer information matched with the speech according to the prior art.

Since it is impossible that the user wants to listen to muse in any mood, and he might only want to chat normally in some moods, it is feasible to, according to actual situations, preset moods in which music needs to be recommended, and moods in which music needn't be recommended.

For example, when the user's mood is parsed as "happy" and "exited", it is possible to chat normally, instead of recommending happy music.

In addition, it is feasible to preset music corresponding to each type of mood for which music needs to be recommended. As such, when the user's mood is parsed, if it is determined that the parsed mood is the mood for which music needs to be recommended, music corresponding to the parsed mood may be recommended to the user.

Recommending music to the user usually refers to playing the music directly to the user.

Preferably, a corresponding music list may be set for each type of mood for which music needs to be recommended. The music list at least includes one piece of music, i.e., the music list may only include one piece of music or may include multiple pieces of music, as shown in Table 1.

**Table 1: Music list corresponding to a certain mood**

| |
|---|
| Music 1 |
| Music 2 |
| Music 3 |
| Music 4 |

As shown in Table 1, assuming that the music list corresponding to a certain mood includes four pieces of music: music 1, music 2, music 3 and music 4 respectively, the multiple pieces of music may be played to the user in turn.

Music played to the user is usually a song.

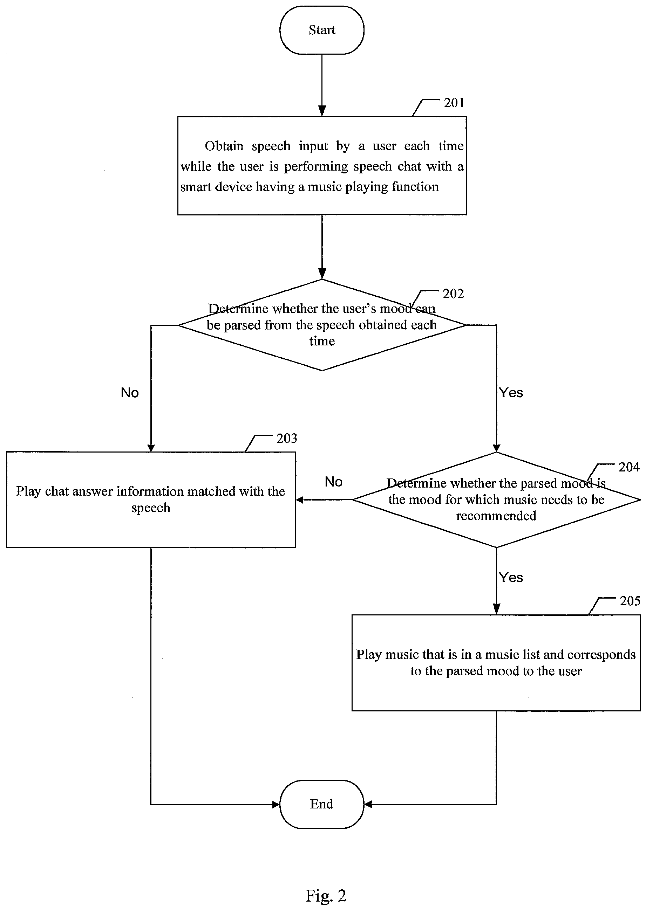

Based on the above introduction, Fig. 2 is a flow chart of a second embodiment of a music recommending method according to the present disclosure. As shown in Fig. 2, the embodiment comprises the following specific implementation mode.

At 201, obtain speech input by a user each time while the user is performing speech chat with a smart device having a music playing function.

At 202, determine whether the user's mood can be parsed from the speech obtained each time, performing 203 if no, and performing 204 if yes.

It is possible to process the speech obtained each time by using current technologies such as speech recognition and semantic analysis, to thereby determine whether the user's mood can be parsed therefrom, and subsequently employ different processing manners respectively according to different determination results.

At 203, play chat answer information matched with the speech, and then end up the process.

If the user's mood cannot be parsed from the speech, the chat answer information matched with the speech may be played according to the prior art.

At 204, determine whether the parsed mood is the mood for which music needs to be recommended, perform 205 if yes, or perform 203 if no.

A corresponding music list may be set for each type of mood for which music needs to be recommended. The music list at least includes one piece of music.

As such, if the parsed mood does not have a corresponding music list, it may be determined that the parsed mood is a mood for which music needn't be recommended, then 203 may be performed, namely, the chat answer information matched with the speech is played according to the prior art.

If the parsed mood has a corresponding music list, it may be determined that the parsed mood is a mood for which music needs to be recommended, and then 205 may be performed.

At 205, play music that is in the music list and corresponds to the parsed mood to the user, and then end up the process.

Preferably, before music is played, a small section of speech corresponding to the user-input speech may be played first, and the speech content may be preset.

A specific application example is presented below:
The user-input speech is:
   "How bored recently! Stay at home every day";
Content played by the smart device is:
   "Life is full of interests and fun. The outside world is colorful. Why not go out for a trip. Now play the song 'meaning of travel' for you."

As appreciated, for ease of description, the aforesaid method embodiments are all described as a combination of a series of actions, but those skilled in the art should appreciated that the present disclosure is not limited to the described order of actions because some steps may be performed in other orders or simultaneously according to the present disclosure. Secondly, those skilled in the art should appreciate the embodiments described in the description all belong to preferred embodiments, and the involved actions and modules are not necessarily requisite for the present disclosure.

In addition, in the above embodiments, different emphasis is placed on respective embodiments, and reference may be made to related depictions in other embodiments for portions not detailed in a certain embodiment.

To sum up, according to the solutions of the above method embodiments, it is possible to determine whether the user's mood can be parsed from the user-input speech obtained each time while the user is performing speech chat with the smart device having a music playing function, and if yes, recommend music matched with the user's mood to the user. As compared with the prior art, in the solutions of the above method embodiments, it is possible to actively capture the user's emotion in language during chat, thereby obtain the user's mood, and then actively recommend music matched with his mood to the user, namely, actively recommend music meeting the user's current mood, thereby not only better resonating with the user, but also satisfying the user's demands for music, and improving the intelligence of the device.

The above introduces the method embodiments. The solution of the present disclosure will be further described through an apparatus embodiment.

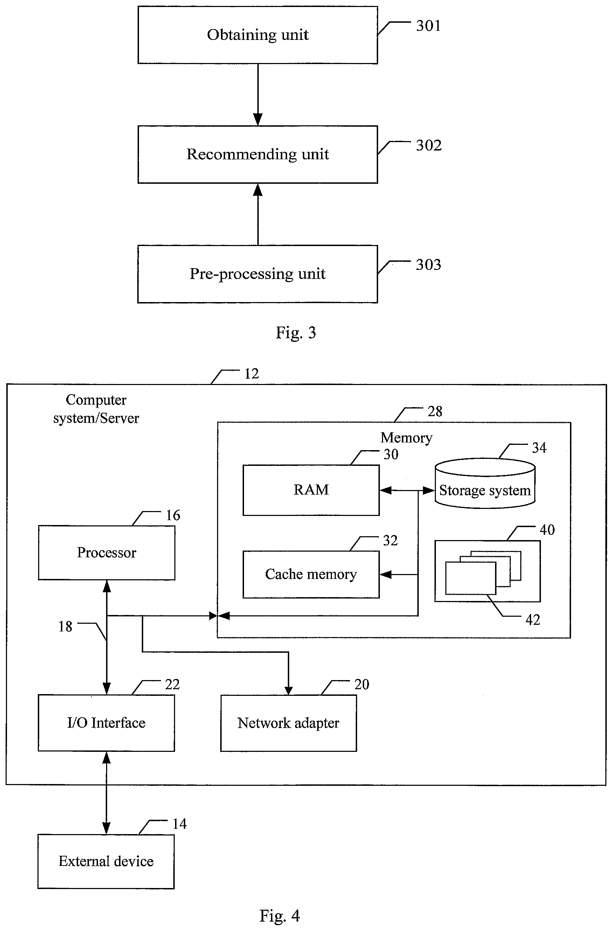

Fig. 3 is a structural schematic diagram of components of a music recommending apparatus according to the present disclosure. As shown in Fig. 3, the apparatus comprises: an obtaining unit 301 and a recommending unit 302.

The obtaining unit 301 is configured to obtain speech input by a user each time while the user is performing speech chat with a smart device having a music playing function, and send the speech obtained each time to the recommending unit 302.

The recommending unit 302 is configured to, if the user's mood can be parsed from the speech obtained each time, recommend music matched with the parsed mood to the user.

The user may chat with the smart device in a speech manner. The recommending unit 302 may process the speech input by the user each time by using current technologies such as speech recognition and semantic analysis, and if the user's mood can be parsed therefrom, recommend music matched with the parsed mood to the user.

For example, if the speech input by the user is "hello", it is impossible to parse therefrom to obtain the user's mood, and correspondingly to recommend music to the user, but play matched chat answer information to the user according to the prior art.

Again for example, if the speech input by the user is "separated from boyfriend yesterday" or "disappointed in love again, already the third time", the user's mood can be parsed as "disappointed" because of "emotion", and correspondingly, "healing" and "soothing" music may be recommended to the user.

In practical application, after the recommending unit 302 parses to obtain the user's mood from the speech, it is possible to recommend music matched with the mood whatever the mood is, or recommend matched music only for some moods, or recommend no matched music for other moods, but process according to the prior art.

Correspondingly, before recommending music matched with the parsed mood to the user, the recommending unit 302 may first determine whether the parsed mood is a mood for which music needs to be recommended, and if yes, recommend music matched with the parsed mood to the user, or if no, play the chat answer information matched with the speech according to the prior art.

In addition, the apparatus shown in Fig. 3 may further comprise a pre-processing unit 303.

The pre-processing unit 303 is configured to set corresponding music respectively for each type of mood for which music needs to be recommended. Preferably, the pre-processing unit 303 may set a corresponding music list for each type of mood for which music needs to be recommended. The music list at least includes one piece of music.

Recommending music to the user usually refers to playing the music directly to the user.

As such, the recommending unit 302 may first determine whether the user's mood can be parsed from the speech obtained each time, and if no, play the chat answer information matched with the speech according to the prior art, or if yes, further determine whether the parsed mood is a mood for which music needs to be recommended, if no, play the chat answer information matched with the speech according to the prior art, or if yes, play music that is in the music list and corresponds to the parsed mood to the user. Furthermore, if the music list includes multiple pieces of music, said multiple pieces of music may be played to the user in turn.

Reference may be made to corresponding depictions in the aforesaid method embodiment for a specific workflow of the apparatus embodiment shown in Fig. 3. The workflow is not detailed any more.

In addition, the apparatus in the embodiment shown in Fig. 3 may be located in a smart device, as a component of the smart device.

According to the solution of the above apparatus embodiment, it is possible to determine whether the user's mood can be parsed from the user-input speech obtained each time while the user is performing speech chat with the smart device having a music playing function, and if yes, recommend music matched with the user's mood to the user. As compared with the prior art, in the solution of the above apparatus embodiment, it is possible to actively capture the user's emotion in language during chat, thereby obtain the user's mood, and then actively recommend music matched with his mood to the user, namely, actively recommend music meeting the user's current mood, thereby not only better resonating with the user, but also satisfying the user's demands for music, and improving the intelligence of the device.

Fig. 4 illustrates a block diagram of an example computer system/server 12 adapted to implement an implementation mode of the present disclosure. The computer system/server 12 shown in Fig. 4 is only an example and should not bring about any limitation to the function and scope of use of the embodiments of the present disclosure.

As shown in Fig. 4, the computer system/server 12 is shown in the form of a general-purpose computing device. The components of computer system/server 12 may include, but are not limited to, one or more processors (processing units) 16, a memory 28, and a bus 18 that couples various system components including system memory 28 and the processor 16.

Bus 18 represents one or more of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

Computer system/server 12 typically includes a variety of computer system readable media. Such media may be any available media that is accessible by computer system/server 12, and it includes both volatile and non-volatile media, removable and non-removable media.

Memory 28 can include computer system readable media in the form of volatile memory, such as random access memory (RAM) 30 and/or cache memory 32. Computer system/server 12 may further include other removable/non-removable, volatile/non-volatile computer system storage media. By way of example only, storage system 34 can be provided for reading from and writing to a non-removable, non-volatile magnetic media (not shown in Fig. 4 and typically called a "hard drive"). Although not shown in Fig. 4, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each drive can be connected to bus 18 by one or more data media interfaces. The memory 28 may include at least one program product having a set (e.g., at least one) of program modules that are configured to carry out the functions of embodiments of the present disclosure.

Program/utility 40, having a set (at least one) of program modules 42, may be stored in the system memory 28 by way of example, and not limitation, as well as an operating system, one or more disclosure programs, other program modules, and program data. Each of these examples or a certain combination thereof might include an implementation of a networking environment. Program modules 42 generally carry out the functions and/or methodologies of embodiments of the present disclosure.

Computer system/server 12 may also communicate with one or more external devices 14 such as a keyboard, a pointing device, a display 24, etc.; with one or more devices that enable a user to interact with computer system/server 12; and/or with any devices (e.g., network card, modem, etc.) that enable computer system/server 12 to communicate with one or more other computing devices. Such communication can occur via Input/Output (I/O) interfaces 22. Still yet, computer system/server 12 can communicate with one or more networks such as a local area network (LAN), a general wide area network (WAN), and/or a public network (e.g., the Internet) via network adapter 20. As depicted in Fig. 4, network adapter 20 communicates with the other communication modules of computer system/server 12 via bus 18. It should be understood that although not shown, other hardware and/or software modules could be used in conjunction with computer system/server 12. Examples, include, but are not limited to: microcode, device drivers, redundant processing units, external disk drive arrays, RAID systems, tape drives, and data archival storage systems, etc.

The processor 16 executes various function applications and data processing by running programs stored in the memory 28, for example, implement the method in the embodiment shown in Fig. 1 or 2, namely, obtain speech input by a user each time while the user is performing speech chat with a smart device having a music playing function; if the user's mood can be parsed from the speech obtained each time, recommending music matched with the parsed mood to the user.

Reference may be made to related depictions in the above embodiments for specific implementations, which will not be detailed any more.

The present disclosure meanwhile provides a computer-readable storage medium on which a computer program is stored, the program, when executed by the processor, implementing the method stated in the embodiment shown in Fig. 1 or 2.

The computer-readable medium of the present embodiment may employ any combinations of one or more computer-readable media. The machine readable medium may be a machine readable signal medium or a machine readable storage medium. A machine readable medium may include, but not limited to, an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the text herein, the computer readable storage medium can be any tangible medium that include or store programs for use by an instruction execution system, apparatus or device or a combination thereof.

The computer-readable signal medium may be included in a baseband or serve as a data signal propagated by part of a carrier, and it carries a computer-readable program code therein. Such propagated data signal may take many forms, including, but not limited to, electromagnetic signal, optical signal or any suitable combinations thereof. The computer-readable signal medium may further be any computer-readable medium besides the computer-readable storage medium, and the computer-readable medium may send, propagate or transmit a program for use by an instruction execution system, apparatus or device or a combination thereof.

The program codes included by the computer-readable medium may be transmitted with any suitable medium, including, but not limited to radio, electric wire, optical cable, RF or the like, or any suitable combination thereof.

Computer program code for carrying out operations disclosed herein may be written in one or more programming languages or any combination thereof. These programming languages include an object oriented programming language such as Java, Smalltalk, C++ or the like, and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

In the embodiments provided by the present disclosure, it should be understood that the revealed apparatus and method can be implemented in other ways. For example, the above-described embodiments for the apparatus are only exemplary, e.g., the division of the units is merely logical one, and, in reality, they can be divided in other ways upon implementation.

The units described as separate parts may be or may not be physically separated, the parts shown as units may be or may not be physical units, i.e., they can be located in one place, or distributed in a plurality of network units. One can select some or all the units to achieve the purpose of the embodiment according to the actual needs.

Further, in the embodiments of the present disclosure, functional units can be integrated in one processing unit, or they can be separate physical presences; or two or more units can be integrated in one unit. The integrated unit described above can be implemented in the form of hardware, or they can be implemented with hardware plus software functional units.

The aforementioned integrated unit in the form of software function units may be stored in a computer readable storage medium. The aforementioned software function units are stored in a storage medium, including several instructions to instruct a computer device (a personal computer, server, or network equipment, etc.) or processor to perform some steps of the method described in the various embodiments of the present disclosure. The aforementioned storage medium includes various media that may store program codes, such as U disk, removable hard disk, Read-Only Memory (ROM), a Random Access Memory (RAM), magnetic disk, or an optical disk.

What are stated above are only preferred embodiments of the present disclosure and not intended to limit the present disclosure. Any modifications, equivalent substitutions and improvements made within the spirit and principle of the present disclosure all should be included in the extent of protection of the present disclosure.

## Claims

1. A music recommending method, wherein the method comprises:
obtaining speech input by a user each time while the user is performing speech chat with a smart device having a music playing function;
if the user's mood can be parsed from the speech obtained each time, recommending music matched with the mood to the user.

2. The method according to claim 1, wherein
before recommending music matched with the mood to the user, the method further comprises:
determining whether the mood is a mood for which music needs to be recommended;
if yes, recommending music matched with the mood to the user;
if no, playing chat answer information matched with the speech.

3. The method according to claim 2, wherein
before obtaining speech input by the user each time, the method further comprises:
setting corresponding music respectively for each type of mood for which music needs to be recommended;
the recommending music matched with the mood to the user comprises:
recommending music corresponding to the mood to the user.

4. The method according to claim 3, wherein
the setting corresponding music respectively for each type of mood for which music needs to be recommended comprises:
setting a corresponding music list for each type of mood for which music needs to be recommended, the music list at least including one piece of music.

5. A music recommending apparatus, wherein the apparatus comprises:
means for obtaining speech input by a user each time while the user is performing speech chat with a smart device having a music playing function;
means fore recommending music matched with the mood to the user if the user's mood can be parsed from the speech obtained each time.

6. The apparatus according to claim 5, wherein the apparatus further comprises:
means for determining whether the mood is a mood for which music needs to be recommended;
means for recommending music matched with the mood to the user;
means for playing chat answer information matched with the speech.

7. The apparatus according to claim 6, wherein the apparatus further comprises:
means for setting corresponding music respectively for each type of mood for which music needs to be recommended;
the means for recommending music matched with the mood to the user comprise:
means for recommending music corresponding to the mood to the user.

8. The apparatus according to claim 7, wherein
the means for setting corresponding music respectively for each type of mood for which music needs to be recommended comprise:
means for setting a corresponding music list for each type of mood for which music needs to be recommended, the music list at least including one piece of music.

9. A computer device, comprising a memory, a processor and a computer program which is stored on the memory and runnable on the processor, wherein the processor, upon executing the program, implements the method according to any of claims 1-4.

10. A computer-readable storage medium on which a computer program is stored, wherein the program, when executed by a processor, implements the method according to any of claims 1-4.
